# FASCICULE DE BREVET EUROPEEN

(11) **EP 3 167 434 B1**
(45) Date de publication et mention de la délivrance du brevet: **02.09.2026**
(21) Numéro de dépôt: 15736827.5
(22) Date de dépôt: 09.07.2015
(51) Int. Cl.: G06T 19/00

(54) **ÉQUIPEMENT OPTRONIQUE AÉROPORTÉ POUR L'IMAGERIE, LA SURVEILLANCE ET/OU LA DÉSIGNATION DE CIBLES**
FLUGZEUGINTEGRIERTE OPTOELEKTRONISCHE AUSRÜSTUNG ZUR ABBILDUNG, ÜBERWACHUNG UND/ODER BESTIMMUNG VON ZIELEN
AIRBORNE OPTOELECTRONIC EQUIPMENT FOR IMAGING, MONITORING AND/OR DESIGNATING TARGETS

(30) Priorité: 11.07.2014 FR 1401558
(43) Date de publication de la demande: 17.05.2017
(73) Titulaire: THALES, 92190 Meudon (FR)
(72) Inventeur: PERRUCHOT, Ludovic, F-78995 Elancourt (FR); BECHE, Arnaud, F-78995 Elancourt (FR); DEPRUGNEY, Fabien, F-78995 Elancourt (FR); RABAULT, Denis, F-78995 Elancourt (FR); DEPARDON, Bruno, F-78995 Elancourt (FR)
(74) Mandataire: Atout PI Laplace
(86) Numéro de dépôt international: PCT/EP2015/065772
(87) Numéro de publication internationale: WO 2016/005535

(56) Documents cités:
- NIETHAMMER U. ET AL: "OPEN SOURCE IMAGE-PROCESSING TOOLS FOR LOW-COST UAV-BASED LANDSLIDE INVESTIGATIONS", THE INTERNATIONAL ARCHIVES OF THE PHOTOGRAMMETRY, REMOTE SENSING AND SPATIAL INFORMATION SCIENCES, vol. XXXVIII-1/C22, 1 January 2011 (2011-01-01), pages 161 - 166, XP055852967, Retrieved from the Internet <URL:https://www.researchgate.net/profile/Mohamed-Mourad-Lafifi/post/Which_open_source_tools_is_are_effective_for_processing_of_aerial_images/attachment/5fd2745e3b21a20001612afd/AS:967275549036544@1607627870790/download/Open%20source%20image-processing%20tools%20for%20low%20cost%20UAV-based%20landslide%2> DOI: 10.5194/isprsarchives-XXXVIII-1-C22-161-2011
- HÖLLERER T ET AL: "CHAPTER 9: Mobile Augmented Reality; in: Telegeoinformatics: Location-Based Computing and Services", INTERNET CITATION, 31 January 2004 (2004-01-31), pages 221 - 260, XP007912968, Retrieved from the Internet <URL:http://graphics.cs.columbia.edu/publications/hollerer-2004-tandf.pdf> [retrieved on 20100506]
- "Handbook of Augmented Reality", 1 January 2011, SPRINGER NEW YORK, New York, NY, ISBN: 978-1-46-140064-6, article MARK A. LIVINGSTON ET AL: "Military Applications of Augmented Reality", pages: 671 - 706, XP055196470, DOI: 10.1007/978-1-4614-0064-6_31
- PASMAN W ET AL: "Accurate overlaying for mobile augmented reality", COMPUTERS AND GRAPHICS, ELSEVIER, GB, vol. 23, no. 6, 1 December 1999 (1999-12-01), pages 875 - 881, XP004187836, ISSN: 0097-8493, DOI: 10.1016/S0097-8493(99)00118-1
- RONALD T AZUMA: "A Survey of Augmented Reality", PRESENCE: TELEOPERATORS AND VIRTUAL ENVIRONMENTS,, vol. 6, no. 4, 1 August 1997 (1997-08-01), pages 355 - 385, XP055178317

## Description

L'invention porte sur un équipement optronique aéroporté, que l'on peut appeler de « vision permanente », pour l'imagerie, la surveillance et/ou la désignation de cibles tel que, par exemple, un « pod » de désignation laser. L'invention porte également sur un procédé mis en œuvre au moyen d'un tel équipement optronique.

Un équipement optronique pour l'imagerie, la surveillance et/ou la désignation de cibles équipant un porteur (généralement un aéronef) comprend un ou plusieurs capteurs d'images qui permettent d'acquérir des images d'une région survolée par le porteur. Au moins une de ces images est affichée sur un écran pour permettre à l'opérateur d'effectuer divers types de missions : de reconnaissance et de surveillance pour analyser une zone et rechercher et identifier des éléments particuliers ; d'attaque pour positionner et désigner des cibles de surface ou aériennes ; ou de navigation en facilitant le vol en conditions difficiles, de nuit ou par mauvaise météo (mode « FLIR », de l'anglais « Forward-Looking InfraRed », c'est-à-dire « infrarouge regardant vers l'avant ») . Si ledit équipement est un « pod » de désignation, il comprend également une source laser et un système de mise en forme de faisceau adapté pour diriger un faisceau laser sur une cible préalablement identifiée par un opérateur sur une image acquise par un dit capteur et affichée par un dit écran.

Ces équipements, connus de l'art antérieur, présentent un certain nombre d'inconvénients :
- En mode détection/désignation, le champ de l'image est très réduit, ce qui rend difficile à l'opérateur de faire le lien entre l'image fournie par l'équipement optronique et ce qu'il voit par lui-même au sol (on parle de « effet paille », car c'est comme si l'opérateur regardait à travers une paille) ;
- La visibilité peut être compromise par les conditions météorologiques (nuages, brouillard...) ou la présence de fumée, voire à cause d'un masquage par le porteur ou le corps de l'équipement optronique lui-même :
- L'imagerie infrarouge présente une résolution relativement faible et des images monochromes, alors que la couleur peut être une information importante, par exemple pour reconnaitre une cible ;
- Les modes FLIR et de détection peuvent être mutuellement exclusifs ;
- Des missions collaboratives peuvent exiger l'affichage d'images acquises par un autre équipement optronique, embarqué sur un autre porteur ; cela nécessite d'une liaison de données à haut débit pour la transmission des données, qui n'est pas toujours disponible.

L'invention vise à surmonter au moins certains de ces inconvénients. Pour ce faire elle propose d'avoir recours, en complément des capteurs d'image « réels », à ce qu'on peut qualifier de « capteur virtuel ». Ce dernier comprend des moyens de traitement des données coopérant avec une base de données terrain géo-localisée pour générer des images « virtuelles » destinées à accompagner, enrichir ou remplacer les images « réelles » acquises par les capteurs.

Les moyens de traitement des données du « capteur virtuel » peuvent être purement logiciels : il s'agit dans ce cas d'un ou plusieurs modules logiciels destinés à être exécutés par un processeur de données qui assure aussi les autres fonctionnalités de l'équipement optronique. Ils peuvent être purement matériels : il s'agit dans ce cas d'un ou plusieurs circuits - de préférence numériques - dédiés. Enfin ils peuvent être hybrides, combinant des modules logiciels et des circuits dédiés. La base de données peut être locale, auquel cas elle est stockée dans une mémoire de masse (par exemple un disque électronique - *solid-state drive* en anglais) localisée sur le porteur ou dans l'équipement optronique, ou être accessible à distance par l'intermédiaire d'une liaison radio.

Un objet de l'invention est donc un équipement optronique aéroporté comprenant :
- au moins un capteur d'images, adapté pour acquérir une pluralité d'images d'une région survolée par un porteur dudit équipement ; et
- un processeur de données configuré ou programmé pour recevoir au moins une dite image acquise et la transmettre à un dispositif d'affichage ;
caractérisé en ce que ledit processeur de données est également configuré ou programmé pour :
- recevoir d'un dispositif de géolocalisation une information de position dudit porteur de l'équipement ou d'un autre porteur, ainsi que des informations indicatives d'une ligne de visée d'un capteur d'images embarqué sur ce porteur
- accéder à une base de données d'images de ladite région survolée ;
- extraire de ladite base de données des informations permettant de synthétiser une image virtuelle de ladite région qui serait vue par un observateur situé à un point d'observation prédéfini et regardant, avec un champ de vision prédéfini, suivant ladite ligne de visée ;
- synthétiser ladite image virtuelle correspondant à ladite ligne de visée et audit point d'observation ayant la même position que ledit porteur, et ;
- la transmettre audit ou à un autre dispositif d'affichage.

Selon différents modes de réalisation d'un tel équipement optronique :
- Ladite base de données peut comprendre au moins : un modèle numérique du terrain de ladite région ; et une pluralité d'images aériennes ou satellitaires ortho-rectifiées ou SAR de ladite région, lesdites images étant géolocalisées ; ledit processeur de données étant configuré ou programmé pour synthétiser ladite image virtuelle par projection d'une ou plusieurs desdites images aériennes ou satellitaires sur ledit modèle numérique du terrain.
- Ladite base de données peut comprendre également des données cartographiques vectorielles, ledit processeur de données étant configuré ou programmé pour intégrer certaines desdites données à ladite image virtuelle.
- Ledit processeur de données peut être configuré ou programmé pour enrichir ladite base de données avec des images acquises par ledit ou au moins un dit capteur d'images.
- Ledit processeur de données peut être configuré ou programmé pour afficher ladite image virtuelle en remplacement d'une image acquise par ledit capteur d'images embarqué en cas de masquage ou de visibilité insuffisante. En variante ou en complément, ledit processeur de données peut être configuré ou programmé pour fusionner ladite image virtuelle et une image acquise par ledit capteur d'images embarqué avec une même ligne de visée et un même champ de vision. Egalement en variante ou en complément, ledit processeur de données peut être configuré ou programmé pour synthétiser une dite image virtuelle, présentant un même point d'observation et une même ligne de visée qu'une image acquise par ledit capteur d'images embarqué, mais un champ de vision plus large, et pour incruster ladite image acquise par ledit capteur d'images embarqué dans ladite image virtuelle. De même, ledit processeur de données peut être configuré ou programmé pour synthétiser une pluralité de dites images virtuelles correspondant à des points de vue proches de la position d'un capteur d'images embarqué sur ledit porteur, telle que déterminée par ledit dispositif de géolocalisation, et pour recalculer ladite position par correspondance entre une image acquise par ledit capteur et lesdites images virtuelles. Ledit processeur de données peut aussi être configuré ou programmé pour : recevoir dudit ou d'au moins un dit capteur d'images, embarqué sur ledit porteur de l'équipement, au moins une image de ladite région survolée par un porteur dudit équipement, et l'afficher sur un premier dispositif d'affichage embarqué sur le même porteur ; recevoir d'un autre porteur une information de position dudit porteur, ainsi que de la ligne de visée et du champ de vision d'au moins un capteur d'image embarqué sur ledit autre porteur ; synthétiser une image virtuelle correspondant à ladite ligne de visée et à un point d'observation ayant ladite position, et l'afficher sur un deuxième dispositif d'affichage distinct dudit premier dispositif d'affichage et embarqué sur ledit porteur de l'équipement.
- L'équipement optronique peut comporter également un dispositif de stockage de données embarqué dans lequel est stockée ladite base de données.
- Ledit processeur de données peut être configuré ou programmé pour piloter ledit ou au moins un dit capteur d'images pour qu'il acquière au moins une dite image de ladite région survolée selon une ligne de visée et avec un champ de vision définis.
- Ledit équipement optronique peut être un équipement optronique aéroporté de désignation de cible.

Un autre objet de l'invention est un procédé mis en œuvre par un tel équipement optronique, comportant les étapes suivantes :
- recevoir d'un dispositif de géolocalisation une information de position du porteur de l'équipement ou d'un autre porteur, ainsi que des informations indicatives d'une ligne de visée d'un capteur d'images embarqué sur ce porteur ;
- accéder à une base de données d'images de ladite région survolée et en extraire des informations permettant de synthétiser une image virtuelle correspondant à ladite ligne de visée et à un point d'observation ayant la même position que ledit porteur ;
- synthétiser ladite image virtuelle ; et
- la transmettre à un dispositif d'affichage.

D'autres caractéristiques, détails et avantages de l'invention ressortiront à la lecture de la description faite en référence aux dessins annexés donnés à titre d'exemple et qui représentent, respectivement :
- La figure 1, deux avions de chasse survolant une région, communiquant par une liaison radio et portant chacun un équipement optronique selon un mode de réalisation de l'invention ;
- La figure 2, un schéma fonctionnel d'un équipement optronique selon un mode de réalisation de l'invention ;
- La figure 3, l'utilisation d'un équipement optronique selon un mode de réalisation de l'invention pour afficher de manière alternative une image réelle ou une image virtuelle ;
- La figure 4, l'utilisation d'un équipement optronique selon un mode de réalisation de l'invention pour afficher une image réelle et une image virtuelle fusionnées ;
- La figure 5, l'utilisation d'un équipement optronique selon un mode de réalisation de l'invention pour afficher une image réelle incrustée dans une image virtuelle à plus large champ de vision ;
- La figure 6, l'utilisation d'un équipement optronique selon un mode de réalisation de l'invention pour afficher simultanément une image réelle et une image virtuelle correspondant à un point d'observation différent dans le cadre d'une mission coopérative ; et
- La figure 7, l'utilisation d'un équipement optronique selon un mode de réalisation de l'invention pour effectuer une opération de correction de la position du porteur par corrélation d'images.

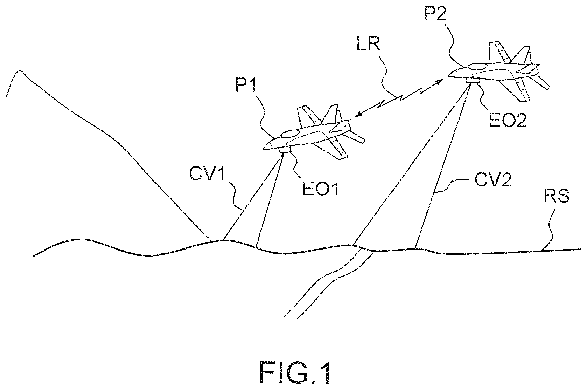

La figure 1 illustre un contexte d'utilisation d'un équipement optronique selon l'invention. Elle représente deux avions de chasse (porteurs) P1 et P2, équipés chacun d'un équipement optronique EO1, EO2 selon un mode de réalisation de l'invention. Ces équipements comprennent des capteurs d'images observant une région RS survolée par les porteurs avec des champs de vision respectifs CV1, CV2. Les deux porteurs - et, si nécessaire, leurs équipements optroniques - communiquent par l'intermédiaire d'une liaison radio de données LR, leur permettant d'effectuer une mission collaborative.

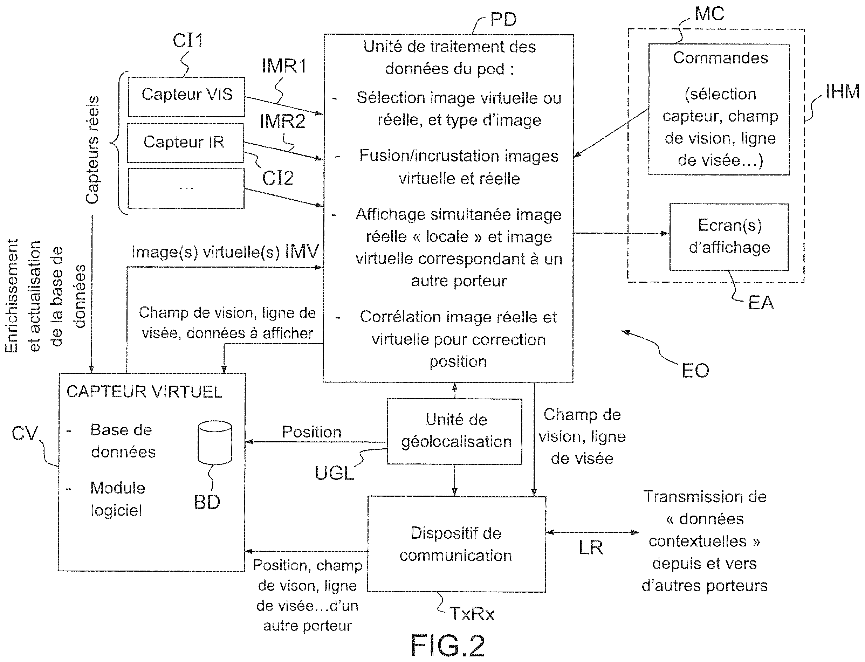

La figure 2 montre un diagramme fonctionnel d'un équipement optronique EO selon un mode de réalisation de l'invention, ou de sa seule partie « imagerie » (les moyens de désignation de cible, qui peuvent être présents, ne sont pas représentés). De manière conventionnelle, cet équipement comprend trois parties principales :
- Un ou plusieurs capteurs d'images, par exemple une caméra fonctionnant dans la partie visible du spectre, CI1, et une caméra infrarouge CI2. Les références IMR1 et IMR2 indiquent les images (appelées « images réelles » par la suite) acquises par ces capteurs, ou plus exactement les données numériques représentant ces images, transportées par des signaux électroniques.
- Une interface homme-machine IHM, comprenant un ou plusieurs écrans d'affichage EA et/ou autres dispositifs d'affichage tels que des viseurs tête haute, permettant à un opérateur de visualiser des images, ainsi que des moyens de commande MC (boutons, claviers, écrans tactiles...) permettant audit opérateur d'entrer des commandes et des paramètres de fonctionnement de l'équipement. Par exemple, les moyens de commande MC peuvent permettre à l'opérateur de sélectionner un capteur d'image, son orientation et son champ de vision, et l'écran EA affiche en temps réel les images acquises par ce capteur.
- Un processeur de données PD, comprenant un ou plusieurs ordinateurs et/ou circuits électroniques dédiés. Le processeur de données pilote des actionneurs assurant l'orientation, la mise au point et le réglage des capteurs d'images CI1, CI2 conformément aux commandes entrées par l'opérateur ; il reçoit les images IMR1, IMR2 acquises par ces capteurs, effectue le cas échéant divers traitements de ces images et assure leur affichage par l'écran ou les écrans EA.

Toujours de manière conventionnelle, l'équipement optronique EO comprend également une unité de géolocalisation UGL, de type AHRS (de l'anglais *« Attitude and heading reference system* », c'est-à-dire centrale de cap et d'attitude) permettant de déterminer la position du porteur et la position précise de la ligne de visée, pouvant exploiter les données issues d'un système GNSS (système satellitaire global de navigation, de l'anglais « Global Navigation Satellite System ») et/ou les données inertielles provenant de la centrale du porteur, et un dispositif de communication TxRx permettant la transmission et la réception de données via la liaison radio LR. En variante, l'unité de géolocalisation et/ou le dispositif de communication peuvent être extérieurs à l'équipement optronique, et configurés pour communiquer avec lui.

L'équipement optronique EO comprend également un capteur virtuel qui, dans le mode de réalisation de la figure 2, est constitué par une base de données BD stockée dans une mémoire de masse embarquée et par un module logiciel exécuté par le processeur de données PD. Comme mentionné plus haut, d'autres modes de réalisation sont envisageables : par exemple, la base de données peut être accessible à distance au lieu d'être embarquée et le module logiciel peut être remplacé en tout ou en partie par des circuits électroniques dédiés faisant partie du processeur de données.

La base de données BD contient un modèle numérique du terrain de la région RS survolée par le porteur, typiquement de type DTED, et une pluralité d'images géolocalisées de ladite région. Les images peuvent avoir différentes origines ; il peut s'agir en particulier de :
- images satellites ortho-rectifiées ;
- images de reconnaissance aérienne multi-spectrales ortho-rectifiées ;
- images acquises en précédence par l'équipement optronique lui-même, ou par d'autres équipements optroniques aéroportés ;
- images SAR (radar à synthèse d'ouverture).

La base de données peut contenir également des données vectorielles géographiques, généralement de type VMAP : réseau routier et ferroviaire, système hydrologique, noms de lieux, etc.

Il est important de noter que l'équipement optronique peut enrichir en temps réel la base de données avec les images qu'il acquiert au cours de chaque mission. Ainsi, on pourra assurer la « fraicheur » des données stockées dans la base.

Le module logiciel reçoit en entrée les informations suivantes :
- une position, qui peut être la position du porteur déterminée par l'unité de géolocalisation UGL, la position d'un autre porteur, reçue par l'intermédiaire du dispositif de communication TxRx, ou une position arbitraire ;
- une ligne de visée, qui peut être colinéaire à celle de l'un des capteurs « réels » de l'équipement optronique - ou à celle d'un capteur d'un tel équipement d'un autre porteur, ou bien être commandée par le pilote ou par une consigne externe ;
- un champ de vision souhaité, qui peut correspondre à celui de l'un des capteurs « réels » de l'équipement optronique - ou à celui d'un capteur d'un tel équipement d'un autre porteur, ou bien être arbitraire ; et
- optionnellement, une liste des informations géographiques à afficher (noms des routes, lieux, etc....).

A partir de ces informations et des informations (modèle numérique, images) stockées dans la base de données, le module logiciel génère une image virtuelle IMV, qui correspond à l'image qui serait acquise par un capteur réel ayant la position, l'orientation (ligne de visée) et le champ de vision souhaités. Typiquement, l'image virtuelle est générée ou synthétisée par projection d'une ou plusieurs des images de la base de données sur ledit modèle numérique du terrain. Les techniques informatiques permettant la synthèse d'une telle image virtuelle sont bien connues de l'homme du métier.

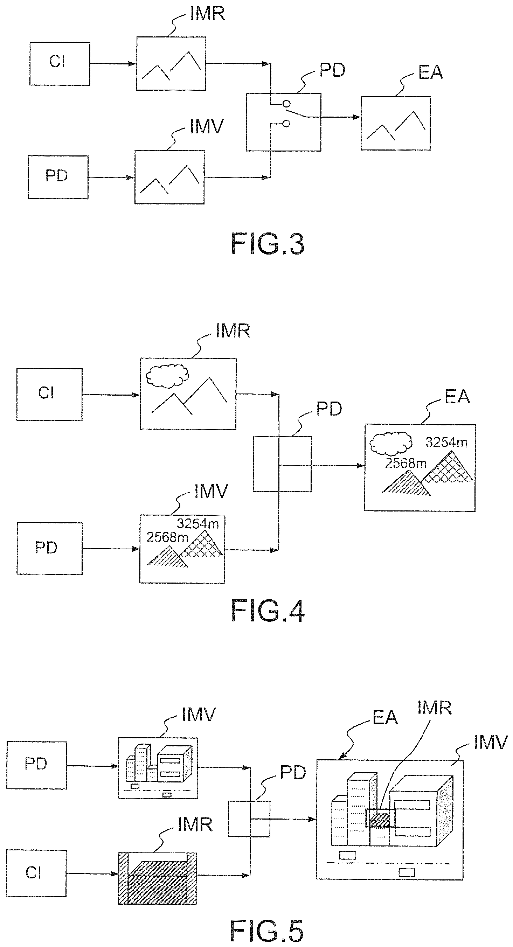

On peut envisager plusieurs utilisations différentes de l'image virtuelle ainsi obtenue. Certaines d'entre elles seront décrites ci-après, en référence aux figures 3 à 7.

Comme illustré sur la figure 3, le processeur de données PD peut sélectionner, pour l'affichage sur l'écran EA, soit une image réelle IMR, soit une image virtuelle IMV correspondant au même point d'observation (ou point de vue), à la même ligne de visée et au même champ de vision. Le choix de l'image à afficher peut être effectué par l'opérateur, ou de manière automatique par le processeur de données, par exemple en présence d'un masquage de l'image réelle.

Comme illustré sur la figure 4, le processeur de données PD peut fusionner une image réelle IMR et une image virtuelle IMV correspondant au même point d'observation, à la même ligne de visée et au même champ de vision pour créer une image enrichie, conformément au principe de la « réalité augmentée », qui est affichée sur l'écran EA. Dans l'exemple de la figure 4, l'image virtuelle contient une information de couleur (représentée, sur la figure, par des hachures) qui est absente de l'image réelle IMR, ainsi que des informations géographiques (hauteur de deux montagnes) ; en revanche, seule l'image réelle IMR permet de visualiser un phénomène éphémère, en l'espèce la présence d'un nuage. L'image enrichie permet d'afficher en même temps toutes ces informations.

Une image réelle IMR à petit champ de vision peut aussi être incrustée dans une image virtuelle IMV à grand champ de vision pour éviter l' « effet paille » précité. Cette situation est illustrée sur la figure 5 où l'image réelle IMR, montrant un immeuble en environnement urbain, est incrustée dans une image virtuelle IMV à plus grand champ de vision afin d'être placée dans son contexte (voierie, autres immeubles servant de répères...). Bien entendu, l'image virtuelle pourrait également afficher des données géographiques facilitant l'identification de l'immeuble - qui pourrait être, dans une application militaire, une cible à désigner. Le cas échéant, l'image à petit champ de vision incrustée dans l'image virtuelle à plus grand champ de vision pourrait être une image enrichie, obtenue par fusion d'une image réelle et d'une image virtuelle (cf. la figure 4).

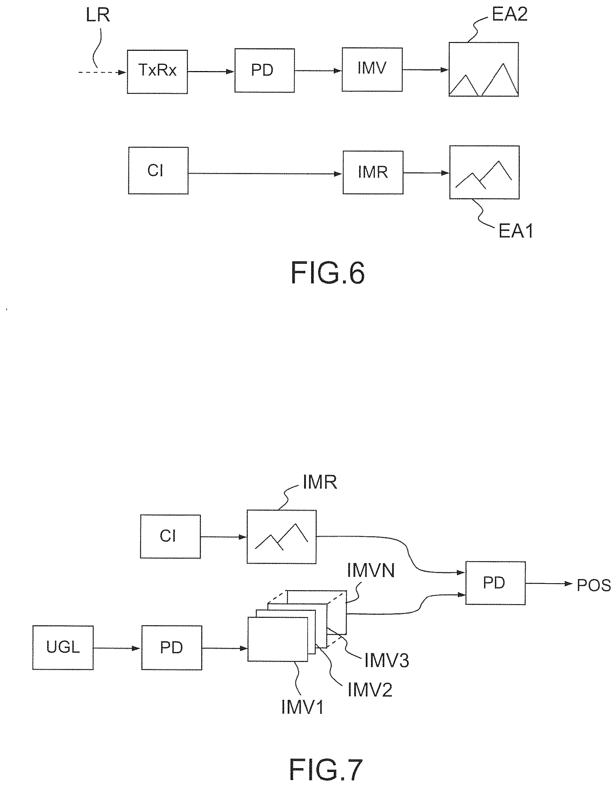

La figure 6 montre une application dans laquelle une image réelle IMR, acquise par un capteur CI de l'équipement optronique, est affichée sur un premier écran EA1. En même temps, une image virtuelle IMV est affichée sur un deuxième écran EA2 ou sur le même écran par commutation ou par incrustation; cette image virtuelle correspond au point d'observation, à la ligne de visée et au champ de vision d'un capteur d'image de l'équipement optronique d'un autre porteur (le cas échéant, il peut même s'agir d'un capteur virtuel, cette variante pouvant servir en particulier à des fins d'entrainement) , ces données étant reçues par le dispositif de communication TxRx. Réciproquement, le dispositif de communication peut être utilisé pour transmettre des données du même type à un équipement optronique embarqué sur ledit autre porteur. Dans le cadre de la mission coopérative de la figure 1, cette application permet au pilote de l'avion P1 de voir ce que voit le pilote de P2, et réciproquement. On remarquera que, contrairement à l'art antérieur, cela ne nécessite pas une liaison à haut débit. En effet, **il** n'est pas nécessaire de transmettre des images d'un porteur à un autre, mais seulement des « données contextuelles » (position, ligne de visée, paramètres de réglage du ou des capteurs d'images) permettant la synthèse d'une image virtuelle.

L'équipement optronique peut également être utilisé pour affiner ou corriger une position déterminée par une unité de géolocalisation UGL. Comme illustré sur la figure 7, l'unité de géolocalisation détermine une première estimation de la position d'un capteur d'images embarqué sur ledit porteur, et le processeur de données PD synthétise une pluralité d'images virtuelles IMV1, IMV2, VI3 ... IMVN correspondant à des points d'observation proches de cette position estimée (c'est-à-dire entourant ladite position et situés dans un rayon défini autour d'elle) et avec une ligne de visée définie. Ledit capteur d'image acquiert une image réelle IMR avec la même ligne de visée. Puis le processeur de données détermine une nouvelle estimation de position par correspondance entre l'image réelle et les images virtuelles.

D'autres applications de l'équipement optronique selon l'invention pourront être envisagées sans sortir du cadre de la présente invention.

## Revendications

1. Equipement optronique aéroporté (EO, EO1, EO2) comprenant :
- au moins un capteur d'images (CI1, CI2), adapté pour acquérir une pluralité d'images (IMR1, IMR2) d'une région (RS) survolée par un porteur (PO1, PO2) dudit équipement ; et
- un processeur de données (PD) configuré ou programmé pour recevoir au moins une dite image acquise et la transmettre en temps réel à un dispositif d'affichage (EA) ;
**caractérisé en ce que** ledit processeur de données est également configuré ou programmé pour :
- recevoir d'un dispositif de géolocalisation (UGL) une information de position dudit porteur de l'équipement ou d'un autre porteur, ainsi que des informations indicatives d'une ligne de visée d'un capteur d'images embarqué sur ce porteur ;
- accéder à une base de données (BD) d'images de ladite région survolée ;
- extraire de ladite base de données des informations permettant de synthétiser une image virtuelle (IMV) de ladite région qui serait vue par un observateur situé à un point d'observation prédéfini et regardant, avec un champ de vision prédéfini, suivant ladite ligne de visée ;
- synthétiser ladite image virtuelle correspondant à ladite ligne de visée et audit point d'observation ayant la même position que ledit porteur et ;
- la transmettre audit ou à un autre dispositif d'affichage.

2. Equipement optronique aéroporté selon la revendication 1 dans lequel ladite base de données comprend au moins :
- un modèle numérique du terrain de ladite région ; et
- une pluralité d'images aériennes ou satellitaires ortho-rectifiées ou SAR de ladite région, lesdites images étant géolocalisées ;
et dans lequel ledit processeur de données est configuré ou programmé pour synthétiser ladite image virtuelle par projection d'une ou plusieurs desdites images aériennes ou satellitaires sur ledit modèle numérique du terrain.

3. Equipement optronique aéroporté selon l'une des revendications précédentes dans lequel ladite base de données comprend également des données cartographiques vectorielles, et dans lequel ledit processeur de données est configuré ou programmé pour intégrer certaines desdites données à ladite image virtuelle.

4. Equipement optronique aéroporté selon l'une des revendications précédentes dans lequel ledit processeur de données est configuré ou programmé pour enrichir ladite base de données avec des images acquises par ledit ou au moins un dit capteur d'images.

5. Equipement optronique aéroporté selon l'une des revendications précedentes dans lequel ledit processeur de données est configuré ou programmé pour afficher ladite image virtuelle en remplacement d'une image acquise par ledit capteur d'images embarqué en cas de masquage ou de visibilité insuffisante.

6. Equipement optronique aéroporté selon l'une des revendications précédentes dans lequel ledit processeur de données est configuré ou programmé pour fusionner ladite image virtuelle et une image acquise par ledit capteur d'images embarqué avec une même ligne de visée et un même champ de vision.

7. Equipement optronique aéroporté selon l'une des revendications précédentes dans lequel ledit processeur de données est configuré ou programmé pour synthétiser une dite image virtuelle, présentant un même point d'observation et une même ligne de visée qu'une image acquise par ledit capteur d'images embarqué, mais un champ de vision plus large, et pour incruster ladite image acquise par ledit capteur d'images embarqué dans ladite image virtuelle.

8. Equipement optronique aéroporté selon l'une des revendications précédentes dans lequel ledit processeur de données est configuré ou programmé pour synthétiser une pluralité de dites images virtuelles correspondant à des points de vue proches de la position d'un capteur d'images embarqué sur ledit porteur, telle que déterminée par ledit dispositif de géolocalisation, et pour recalculer ladite position par correspondance entre une image acquise par ledit capteur et lesdites images virtuelles.

9. Equipement optronique aéroporté selon l'une des revendications précédentes dans lequel ledit processeur de données est configuré ou programmé pour :
- recevoir dudit ou d'au moins un dit capteur d'images, embarqué sur ledit porteur de l'équipement, au moins une image de ladite région survolée par un porteur dudit équipement, et l'afficher sur un premier dispositif d'affichage embarqué sur le même porteur ;
- recevoir d'un autre porteur une information de position dudit porteur, ainsi que de la ligne de visée et du champ de vision d'au moins un capteur d'image embarqué sur ledit autre porteur ;
- synthétiser une image virtuelle correspondant à ladite ligne de visée et à un point d'observation ayant ladite position, et l'afficher sur un deuxième dispositif d'affichage distinct dudit premier dispositif d'affichage et embarqué sur ledit porteur de l'équipement.

10. Equipement optronique aéroporté selon l'une des revendications précédentes comportant également un dispositif de stockage de données embarqué dans lequel est stockée ladite base de données.

11. Equipement optronique aéroporté selon l'une des revendications précédentes dans lequel ledit processeur de données est configuré ou programmé pour piloter ledit ou au moins un dit capteur d'images pour qu'il acquière au moins une dite image de ladite région survolée selon une ligne de visée et avec un champ de vision définis.

12. Equipement optronique aéroporté selon l'une des revendications précédentes, étant un équipement optronique de désignation de cible.

13. Procédé mis en œuvre par un équipement optronique selon l'une des revendications précédentes, comportant les étapes suivantes :
- recevoir d'un dispositif de géolocalisation (UGL) une information de position du porteur de l'équipement ou d'un autre porteur, ainsi que des informations indicatives d'une ligne de visée d'un capteur d'images embarqué sur ce porteur ;
- accéder à une base de données (BD) d'images de ladite région survolée et en extraire des informations permettant de synthétiser une image virtuelle (IMV) correspondant à ladite ligne de visée et à un point d'observation ayant la même position que ledit porteur ;
- synthétiser ladite image virtuelle ; et
- la transmettre à un dispositif d'affichage (EA).

## Patentansprüche

1. Flugzeugintegrierte optoelektronische Ausrüstung (EO, EO1, EO2), umfassend:
- mindestens einen Bildsensor (CI1, CI2), der angepasst ist, um eine Vielzahl von Bildern (IMR1, IMR2) eines von einem Träger (PO1, PO2) der Ausrüstung überflogenen Bereichs (RS) zu erfassen; und
- einen Prozessor (PD), der konfiguriert oder programmiert ist, um das mindestens eine erfasste Bild zu empfangen und es in Echtzeit an eine Anzeigevorrichtung (EA) zu übertragen;
**dadurch gekennzeichnet, dass** der Prozessor ebenfalls konfiguriert oder programmiert ist zum:
- Empfangen, von einer Geolokalisierungsvorrichtung (UGL), einer Information der Position des Trägers der Ausrüstung oder eines anderen Trägers sowie von Informationen, die eine Visierlinie eines in diesem Träger eingebauten Bildsensors angeben;
- Zugreifen auf eine Bilderdatenbank (BD) des überflogenen Bereichs;
- Extrahieren, aus der Datenbank, der Informationen, die ermöglichen, ein virtuelles Bild (IMV) des Bereichs zu synthetisieren, der von einem Beobachter gesehen würde, der sich an einem vorgegebenen Beobachtungspunkt befindet und mit einem vorgegebenen Sichtfeld entlang der Visierlinie blickt;
- Synthetisieren des virtuellen Bildes, das der Visierlinie und dem Beobachtungspunkt entspricht, der die gleiche Position wie der Träger aufweist; und
- Übertragen desselben an die oder eine andere Anzeigevorrichtung.

2. Flugzeugintegrierte optoelektronische Ausrüstung nach Anspruch 1, wobei die Datenbank mindestens Folgendes umfasst:
- ein numerisches Modell des Gebiets des Bereichs; und
- eine Vielzahl von orthorektifizierten Luft- oder Satellitenbildern oder SAR des Bereichs, wobei die Bilder geolokalisiert sind;
und wobei der Prozessor konfiguriert oder programmiert ist, um das virtuelle Bild durch Projektion eines oder mehrerer der Luft- oder Satellitenbilder auf das numerische Modell des Gebiets zu synthetisieren.

3. Flugzeugintegrierte optoelektronische Ausrüstung nach einem der vorstehenden Ansprüche, wobei die Datenbank ebenfalls Vektorkartendaten umfasst, und wobei der Prozessor konfiguriert oder programmiert ist, um gewisse der Daten in das virtuelle Bild zu integrieren.

4. Flugzeugintegrierte optoelektronische Ausrüstung nach einem der vorstehenden Ansprüche, wobei der Prozessor konfiguriert oder programmiert ist, um die Datenbank mit von dem oder dem mindestens einen Bildsensor erfassten Bildern anzureichern.

5. Flugzeugintegrierte optoelektronische Ausrüstung nach einem der vorstehenden Ansprüche, wobei der Prozessor konfiguriert oder programmiert ist, um im Falle einer Verschleierung oder unzureichenden Sicht das virtuelle Bild als Ersatz für ein von dem eingebauten Bildsensor erfassten Bildern anzuzeigen.

6. Flugzeugintegrierte optoelektronische Ausrüstung nach einem der vorstehenden Ansprüche, wobei der Prozessor konfiguriert oder programmiert ist, um das virtuelle Bild und ein von dem eingebauten Bildsensor erfasstes Bild mit gleicher Visierlinie und gleichem Sichtfeld zu verschmelzen.

7. Flugzeugintegrierte optoelektronische Ausrüstung nach einem der vorstehenden Ansprüche, wobei der Prozessor konfiguriert oder programmiert ist, um das eine virtuelle Bild, das einen gleichen Beobachtungspunkt und eine gleiche Visierlinie wie ein Bild, das von dem eingebauten Bildsensor erfasst wird, jedoch ein weiteres Sichtfeld aufweist, zu synthetisieren, und
um das von dem eingebauten Bildsensor erfasste Bild in das virtuelle Bild einzufügen.

8. Flugzeugintegrierte optoelektronische Ausrüstung nach einem der vorstehenden Ansprüche, wobei der Prozessor konfiguriert oder programmiert ist, um eine Vielzahl der virtuellen Bilder zu synthetisieren, die Aussichtspunkten entsprechen, die in der Nähe der Position eines im Träger eingebauten Bildsensors liegen, wie durch die Geolokalisierungsvorrichtung bestimmt, und um die Position durch Entsprechung zwischen einem von dem Sensor erfassten Bild und den virtuellen Bildern erneut zu berechnen.

9. Flugzeugintegrierte optoelektronische Ausrüstung nach einem der vorstehenden Ansprüche, wobei der Prozessor konfiguriert oder programmiert ist zum:
- Empfangen, von dem oder dem mindestens einen Bildsensor, der im Träger der Ausrüstung eingebaut ist; mindestens eines Bildes des von einem Träger der Ausrüstung überflogenen Bereichs und Anzeigen desselben auf einer ersten Anzeigevorrichtung, die im gleichen Träger eingebaut ist;
- Empfangen, von einem anderen Träger, einer Information der Position des Trägers sowie der Visierlinie und des Sichtfeldes mindestens eines in dem anderen Träger eingebauten Bildsensors;
- Synthetisieren eines virtuellen Bildes, das der Sichtlinie und einem Beobachtungspunkt, der die Position aufweist, entspricht, und Anzeigen desselben auf einer zweiten Anzeigevorrichtung, die sich von der ersten Anzeigevorrichtung unterscheidet und im Träger der Ausrüstung eingebaut ist.

10. Flugzeugintegrierte optoelektronische Ausrüstung nach einem der vorstehenden Ansprüche, die ebenfalls eine eingebaute Datenspeichervorrichtung umfasst, worin die Datenbank gespeichert ist.

11. Flugzeugintegrierte optoelektronische Ausrüstung nach einem der vorstehenden Ansprüche, wobei der Prozessor konfiguriert oder programmiert ist, um den oder den mindestens einen Bildsensor so zu lenken, dass er das mindestens eine Bild des überflogenen Bereichs entlang einer festgelegten Visierlinie und einem festgelegten Sichtfeld erfasst.

12. Flugzeugintegrierte optoelektronische Ausrüstung nach einem der vorstehenden Ansprüche, bei der er sich um eine optoelektronische Zielmarkierungsausrüstung handelt.

13. Verfahren, das von einer optoelektronischen Ausrüstung nach einem der vorstehenden Ansprüche durchgeführt wird, umfassend die folgenden Schritte:
- Empfangen, von einer Geolokalisierungsvorrichtung (UGL), einer Information der Position des Trägers der Ausrüstung oder eines anderen Trägers sowie von Informationen, die eine Visierlinie eines in diesem Träger eingebauten Bildsensors angeben;
- Zugreifen auf eine Bilderdatenbank (BD) des überflogenen Bereichs und Extrahieren der Informationen aus derselben, die ermöglichen, ein virtuelles Bild (IMV) zu synthetisieren, das der Visierlinie und einem Beobachtungspunkt entspricht, der die gleiche Position wie der Träger aufweist;
- Synthetisieren des virtuellen Bildes; und
- Übertragen desselben an eine Anzeigevorrichtung (EA).

## Claims

1. Airborne optronic equipment (EO, EO1, EO2) comprising:
- at least one image sensor (CI1, CI2), adapted to acquire a plurality of images (IMR1, IMR2) of a region (RS) overflown by a carrier (PO1, PO2) of said equipment; and
- a data processor (PD) configured or programmed to receive at least one of a said acquired image and transmit it in real time to a display device (EA);
**characterized in that** said data processor is also configured or programmed to:
- receiving, from a geolocation device (UGL), a position information of said carrier of the equipment or of another carrier, as well as information indicating a line of sight of an image sensor onboard that carrier;
- accessing a database (BD) of images of said overflown region;
- extracting from said database information in order to synthesize a virtual image (IMV) of said region as it would be seen by an observer located at a predefined observation point and looking, with a predefined field of view, along said line of sight;
- synthesizing said virtual image corresponding to said line of sight and said observation point having the same position as said carrier; and
- transmitting it to said display device or to another display device.

2. Airborne optronic equipment according to claim 1, wherein said database comprises at least:
- a digital model of the terrain of said region; and
- a plurality of orthorectified aerial or satellite images or SAR images of said region, said images being geolocated;
and wherein said data processor is configured or programmed to synthesize said virtual image by projecting one or more of said aerial or satellite images onto said digital model of the terrain.

3. Airborne optronic equipment according to any one of the preceding claims, wherein said database also comprises vector map data, and wherein said data processor is configured or programmed to integrate some of said data into said virtual image.

4. Airborne optronic equipment according to any one of the preceding claims, wherein said data processor is configured or programmed to enrich said database with images acquired by said or at least one said image sensor.

5. Airborne optronic equipment according to any one of the preceding claims, wherein said data processor is configured or programmed to display said virtual image replacing an image acquired by said onboard image sensor in case of masking or insufficient visibility.

6. Airborne optronic equipment according to any one of the preceding claims, wherein said data processor is configured or programmed to fuse said virtual image and an image acquired by said onboard image sensor with a same line of sight and a same field of view.

7. Airborne optronic equipment according to any one of the preceding claims, wherein said data processor is configured or programmed to synthesize a said virtual image having a same observation point and a same line of sight as an image acquired by said onboard image sensor, but a wider field of view, and
to inlay said image acquired by said onboard image sensor in said virtual image.

8. Airborne optronic equipment according to any one of the preceding claims, wherein said data processor is configured or programmed to synthesize a plurality of said virtual images corresponding to viewpoints close to the position of an image sensor onboard said carrier, as determined by said geolocation device, and to recalculate said position by matching an image acquired by said sensor and said virtual images.

9. Airborne optronic equipment according to any one of the preceding claims, wherein said data processor is configured or programmed to:
- receive from said or from at least one said image sensor, onboard said carrier of the equipment, at least one image of said region overflown by a carrier of said equipment, and display it on a first display device onboard the same carrier;
- receive from another carrier a position information of said carrier, as well as the line of sight and field of view of at least one image sensor onboard said other carrier;
- synthesize a virtual image corresponding to said line of sight and to an observation point having said position, and display it on a second display device separate from said first display device and onboard said carrier of the equipment.

10. Airborne optronic equipment according to any one of the preceding claims, also comprising an onboard data storage device in which said database is stored.

11. Airborne optronic equipment according to any one of the preceding claims, wherein said data processor is configured or programmed to drive said or at least one said image sensor so that it acquires at least one said image of said overflown region along a defined line of sight and with a defined field of view.

12. Airborne optronic equipment according to any one of the preceding claims, being an optronic equipment of target designation.

13. Method implemented by an optronic equipment according to any one of the preceding claims, comprising the following steps:
- receiving, from a geolocation device (UGL), a position information of the carrier of the equipment or of another carrier, as well as information indicating a line of sight of an image sensor onboard that carrier;
- accessing a database (BD) of images of said overflown region and extracting information therefrom in order to synthesize a virtual image (IMV) corresponding to said line of sight and to an observation point having the same position as said carrier;
- synthesizing said virtual image; and
- transmitting it to a display device (EA).
